(19) **Europäisches Patentamt**

**European Patent Office**

**Office européen des brevets**

(11) **EP 1 720 265 A1**

(12) **EUROPEAN PATENT APPLICATION**

(43) Date of publication:
08.11.2006 Bulletin 2006/45

(51) Int Cl.:
*H04B 7/02* (2006.01)    *H04B 1/707* (2006.01)

(21) Application number: 05009854.0

(22) Date of filing: 04.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **SIEMENS AKTIENGESELLSCHAFT**
**80333 München (DE)**

(72) Inventors:
• **Heddergott, Ralf**
  **80801 München (DE)**
• **Krakowski, Claudiu**
  **82194 Gröbenzell (DE)**
• **Xu, Wen, Dr.**
  **85579 Neubiberg (DE)**

(54) **Diversity system with only one receive antenna**

(57)    A digital receiver (RE) for a communication device (MP) or for a base station (BA) of radio telecommunication system comprises only one receiving antenna (RA) for detecting a transmitted radio information signal (RS) having different signal components (RS1 to RSk) on a plurality of distinct carrier frequencies (f1 to fk). Within the receiving path (RAP) of the receiving antenna (RA) at least one frequency downconverter (FD1 to FDk) for downconverting all signal components (RS1 to RSk) of said detected radio signal (RS) from their respective carrier frequencies (f1 to fk) to a given baseband (B) is provided. Downstream after said downconverter (FD1 to FDk) a baseband signal processing unit (BSG) is provided processing these downconverted signal components (BS1 to BSk) as at least two diversity signals coming from different diversity paths and combining these at least two diversity signals (BS1 to BSk) in such a way that cochannel interference and/or adjacent channel interference is suppressed.

Fig. 2

EP 1 720 265 A1

**Description**

In the downlink of a cellular mobile communication system the radio link performance of a specific mobile radio channel suffers from the fading of the mobile radio channel, the thermo noise in the transmitter and receiver, etc., as well as from interference from signals dedicated to other users. The first case is referred to as sensitivity-limited, whereas the second case is denoted as interference-limited. When interferer's signals are transmitted on the same carrier frequency as those for the desired user, the type of interference is called "co-channel interference (CCI)". When the interferer's signals are transmitted on an adjacent carrier frequency with significant portion of the spectral power interfering with the spectrum of the desired user, this type of interference is called "adjacent channel interference (ACI)".

Conventionally, a certain degree of CCI and ACI is accepted and taken into account in frequency planning. Mobile radio standards, such as the GSM standard (see reference [1]), usually place requirements on the reception performance [2].

Diversity combining algorithms optimal for overcoming radio channel fading, such as maximum-ratio combining according to references [8] in general also improve performance in interference-limited scenarios. However algorithms that strive for optimality in terms of signal- to- noise-and-interferer ratio (SINR) provide even higher gains in terms of CCI and ACI suppression (see [7], [9]).

GSM terminals supporting downlink advanced receiver performance - phase I (DARP) (see [3]) use receivers which attempt to cancel or suppress interference by means of signal processing without the use of multiple antennas (see [4]). Essentially, mobile stations of this type have to meet tighter requirements on CCI suppression (see [2]). This kind of receivers exploit the fact that the real and the imaginary part of the GMSK (Gaussian minimum shift key) signal can be used as diversity branches. Technical realizations rely on solutions as described in [7]. The DARP feature is up to now restricted to GMSK modulated signals.

Recently, a new work item denoted as "Future GERAN Evolution" (see [5]) has been adopted in GERAN (GSM/ EDGE Radio Access Network) standardization. The goal is to evolve the GERAN radio interface towards an increase of spectral efficiency, capacity, coverage, and data rates. Among the techniques under consideration are multicarrier transmission and downlink receiving antenna diversity (see [6]). US4,142,155 shows a multicarrier transmission system for FM signals. Multicarrier transmission aims at increasing the data rate through transmission of different information signals at the same time on distinct carriers. Downlink receiving antenna diversity (see [6]) can provide high gains in terms of CCI and ACI suppression, and is also applicable to complex-valued modulation schemes, such as 8-PSK (Phase Shift Key). However, it requires a receiver antenna consisting of two elements. The design of such an antenna arrangement is a technologically challenging task. Moreover, the gain of this antenna arrangement depends on the propagation scenario, i.e. the signals on the receiver branches have to be uncorrelated.

It is an object of the invention to provide an improved digital receiver for a communication device or for a base station of a radio telecommunication system.

This objective is accomplished by a digital receiver for a communication device or for a base station of a radio telecommunication system comprising only one receiving antenna for detecting a transmitted radio information signal having different signal components on a plurality of distinct carrier frequencies, wherein within the receiving path of the receiving antenna at least one frequency downconverter for downconverting all signal components of said detected radio signal from their respective carrier frequencies to a given baseband is provided, and wherein downstream after said downconverter a baseband signal processing unit is provided processing these downconverted signal components as at least two diversity signals coming from different diversity paths and combining these at least two diversity signals in such a way that co-channel interference and/or adjacent channel interference is suppressed.

This multicarrier diversity transmission and receiving scheme is capable of reducing the effects of channel fading and mitigating interference both, particularly reducing CCI and/or ACI. For example a base station of a radio telecommunication system transmits the same baseband information signal at the same time over two or more distinct carriers. Thus, such a radio information signal being transmitted over at least one radio transmission channel via air interface of the communication device or the base station has different signal components on a plurality of distinct carrier frequencies. Preferably, the separation of the carrier frequencies is chosen such that transmission channel coefficients can be regarded as statistically independent.

The digital receiver of a communication device, particularly a mobile terminal or mobile phone, or of a base station is only equipped with a single receiver antenna for detecting a transmitted radio information signal. The signal components of said transmitted radio information signal are detected by the single receiving antenna of the digital receiver and then downconverted from their respective carrier frequencies to a given frequency baseband by at least one frequency downconverter. After the downconverter a baseband signal processing unit combines these downconverted signal components as at least two incoming diversity signals in such a way that co-channel interference and/or adjacent channel interference is suppressed. Preferably a decoupled linear filter/nonlinear equalizer such as described in [9] is used. A decoupled linear filter/nonlinear equalizer performs two tasks:

- CCI reduction by means of a linear filter
- ISI (Inter-symbol interference) reduction by means of a nonlinear equalizer.

The equivalent discrete-time channel model considered is given as

$$y^{(i)}[k] = \sum_{l=0}^{L} h_l^{(i)}[k]a[k-l] + \sum_{j=1}^{J}\sum_{l=0}^{L} g_{j,l}^{(i)}[k]b_j[k-l] + n^{(i)}[k], \quad 0 \le k \le K-1, \quad (1)$$

where $y^{(i)}[k] \in C$ is a $k$-th baud-rate output sample of an $i$-th carrier, L is an effective memory length of the discrete-time ISI channel model, $h_l^{(i)}[k] \in C$ are the channel coefficients of the i-th carrier of a desired user ($E\{\|h^{(i)}[k]^2\|\}=1$), $g_{j,l}^{(i)}[k] \in C$ are the channel coefficients of the i-th carrier of the j-th interferer, J is the number of interferer, $a[k]$ and $b_j[k]$ is a k-th independent identically distributed (i.i.d.) data symbol of the desired user and the j-th interferer, respectively, both randomly drawn over an M-ary alphabet ($E\{a[k]=E\{b_j[k]\}=0, E\{a[k]^2)\}=E\{b_j[k]^2\}=1$), $n^{(i)}[k] \in C$ is the k-th sample of a Gaussian noise process ($E\{n^{(i)}[k]\}=0, E\{n^{(i)}[k]^2\}=N_0/E_s$), k is a time index, and K is a number of M-ary data symbols per burst. According to the equivalent discrete-time channel model (1) the received signal can be split into a desired user term, another users' term representing CCI, and a noise term. The linear filter suppresses only the other users' term. The remaining ISI of the desired user is canceled by the nonlinear equalizer. This receiver structure is compatible with state-of-the-art TDMA receivers, where just the linear filter (called prefilter) is missing. In the following, a finite impulse response (FIR) filter w is considered. The optimum filter coefficients in the sense of maximizing the signal-to-interference-plus-noise ratio (SINR) can be obtained as

$$\mathbf{w}^H = \mathbf{r}_{ya}^H \left[ \mathbf{R}_{yy} - \mathbf{R}_{ya}^H \mathbf{R}_{ya} \right]^{-1}. \quad (2)$$

if the data symbols are independent and identically distributed (i.i.d.). In (2), $\mathbf{R}_{yy}:=E\{\mathbf{yy}^H\}$ is the autocorrelation matrix of the received samples, $\mathbf{R}_{ya}:=E\{\mathbf{ay}^H\}$ is a crosscorrelation matrix between the received samples and the data sequence of the desired user, and $\mathbf{r}_{ya}:=E\{a^*[k-k_0]\mathbf{y}\}$ is a crosscorrelation vector; k0 is the decision delay of the prefilter w. The prefilter coefficients are either symbol-spaced or fractionally-spaced, depending on whether oversampling is applied or not. As opposed to alternative solutions available in the literature derived for the same optimization criterion, no eigenvalue problem has to be solved in (2) in order to compute the prefilter coefficients. This significantly simplifies the computational complexity. In order to compute the prefilter coefficients, $\mathbf{R}_{yy}$, $\mathbf{R}_{ya}$ and $\mathbf{r}_{ya}^H$ have to be estimated. Towards this end, conventionally the expected values $E\{\bullet\}$ are replaced by mean values. Due to the finite length of the training sequence of the desired user the estimation is poor. As an alternative channel estimates may be used in order to compute the prefilter coefficients, since for i.i.d. data $\mathbf{R}_{yy}$, $\mathbf{R}_{ya}$ and $\mathbf{r}_{ya}^H$ only depend on the channel coefficients and on the variance of the Gaussian noise term. If reliable channel estimates are available, the estimation is usually better than in the conventional approach. The following cases can be advantageously distinguished:

(A) channel estimates are available for the desired user and the interferer(s),
(B) channel estimates are available only for the desired user, and
(C) channel estimates are not available at all (conventional approach).

Since the prefilter mitigates the CCI, the cascaded nonlinear equalizer has to be matched to the ISI channel of the desired user (modified by the linear CCI canceler). Equalizers (such as trellis-based, tree-based, and/or graph-based equalizers) are suitable, preferably delivering reliability information in conjunction with the detected data symbols. Thus, gains over multipath channel fading, CCI and/or ACI can be achieved.

Advantageously the communication device, particularly mobile terminal, can indicate its capability to support receiving radio information signals being processed with the diversity transmission scheme to the telecommunication system, particularly to a base station of the telecommunication system.

Mobile terminals supporting multicarrier transmission as described in [6] may also support the multicarrier diversity scheme described in this invention. This can easily be implemented in a mobile terminal as part of the DSP software algorithms.

The presented scheme can be realized with only one receiving antenna. This reduces the costs of the terminal hardware and circumvents the problem of the technologically difficult design of a multi-element antenna. Moreover, statistical independence of the received signals on the diversity branches can more easily be accomplished by transmission over distinct carriers.

In a GSM system for example, opposite to DARP related to single antenna interference cancellation, the multicarrier diversity scheme is applicable to both GMSK and 8-PSK modulated signals.

Multicarrier diversity occupies two or more carrier frequency resources of each cell of the mobile communication system. However, this does not necessarily lead to a reduction in cellular capacity. For example, when maximum-ratio combining of the signals received on the two diversity branches is applied, it is possible to reduce the transmitted power per carrier with the same link quality, reducing interference to neighboring cells. With the advanced interference cancellation algorithms, system capacity can even be increased by exploiting the tremendous gains offered by these types of algorithms.

The system under consideration is the GSM system. However, the invention is adaptable to other mobile communication systems as well.

The invention also relates to a communication device or a base station of a radio telecommunication system having an inventive digital receiver.

Preferred embodiments of the invention are defined by the subject matters of the dependent claims.

The present invention and its further embodiments are hereinafter described with reference to the accompanying drawings, in which:

figure 1      schematically illustrates a digital transmitter of a communication device or a base station of a radio telecommunication system for transforming a radio information signal in a plurality of signal components on different carrier frequencies which are transmitted over an air interface,

figure 2      schematically illustrates a first embodiment of an inventive digital receiver of a communication device or a base station of a radio telecommunication system for recovering said transmitted radio information signal of figure 1,

figure 3      schematically illustrates a communication device comprising the transmitter of figure 1 and the digital receiver of figure 2 together with a base station of the radio telecommunication system, and

figure 4      schematically illustrates a bit error rate diagram for different diversity combining schemes in respect of co-channel interference used by the digital receiver of figure 2.

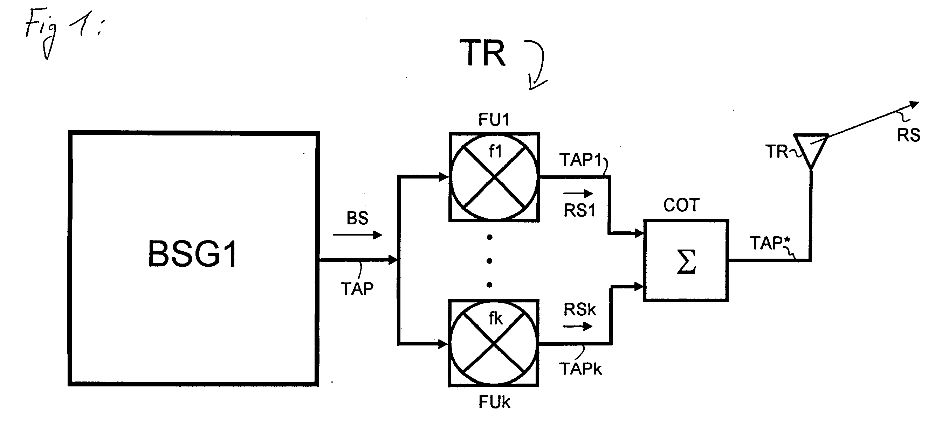

Like reference signs refer to corresponding parts and elements throughout the figures 1 to 4.

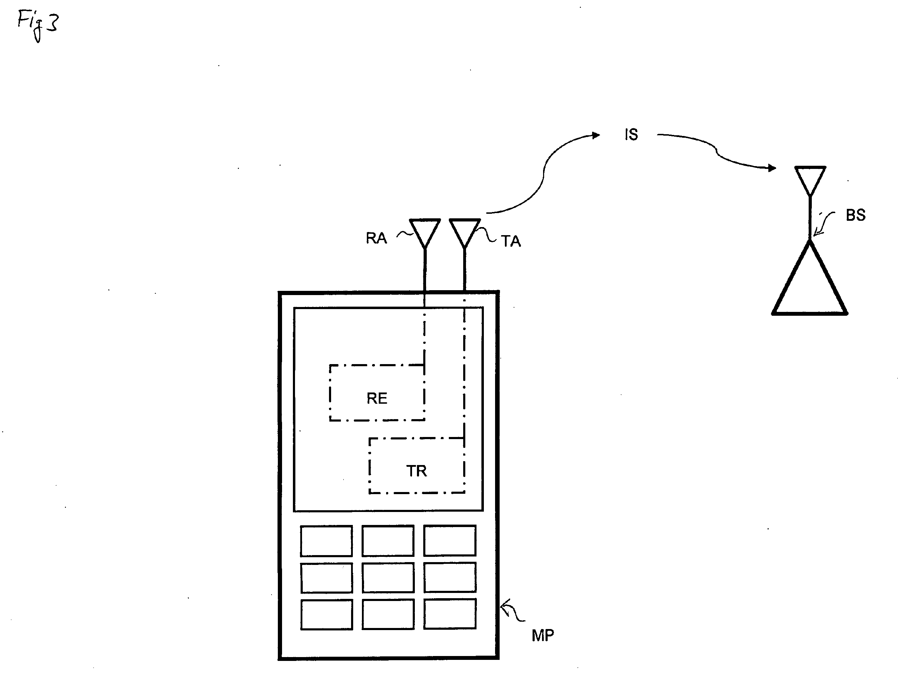

Figure 1 shows a transmitter TR which is a component of a base station BS depicted in Figure 3. The transmitter TR provides a baseband signal processor BSG1 which processes a radio information signal BS in a given frequency baseband and outputs this processed information signal BS to a common, single transmission branch TAP. The common transmission branch TAP splits up in a plurality of separate transmission branches TAP1 to TAPk. Each separate transmission branch TAP1 to TAPk has a frequency upconverter FU1 to FUk for upconverting the information signal BS on a plurality of distinct carrier frequencies f1 to fk resulting in upconverted signal components RS1 to RSk of the radio transmission signal BS. The outputs of the separate transmission branches TAP1 to TAP2 are connected downstream to a common signal combiner COT. This common signal combiner COT combines all upconverted signal components RS1 to RSk resulting in radio information signal RS having different signal components RS1 to RSk on a plurality of distinct carrier frequencies f1 to fk. Such a multicarrier sum signal RS is transmitted over a common antenna branch TAP* to a transmitting antenna TA which emits the multicarrier sum signal RS via air interface to a communication device (such as a mobile phone) MP depicted in figure 3, particularly a mobile terminal of a mobile radio communication system.

In summary the transmitter consists of a baseband signal generator that generates a (complex) baseband signal. The signal is upconverted to k distinct radio carrier frequencies f1 to fk. The radio frequency signals are combined and transmitted for example over the base station transmitting antenna.

On the receiving side at the communication device MP the incoming radio information signal RS is detected by one, i.e. single receiving antenna RS of a digital receiver RE. The radio information signal RS is forwarded by the common receiving path or branch RAP of the receiver RE to several separate receiving branches RAP1 to RAPk. The number of branches is preferably equal to the number of carrier frequencies used on the sending side. Each receiving branch RAP1 to RAPk comprises a frequency downconverter FD1 to FDk for downconverting all signal components RS1 to RSk of the detected radio information signal RS from their respective carrier frequencies f1 to fk to a given baseband. Thus the plurality of signal components RS1 to RSk of the detected radio information signal RS is downconverted to baseband signal components BS1 to BSk by k radio frequency downconverters FD1 to FDk. Downstream after these downconverters FD1 to FDk the k receiving branches RAP1 to RAPk are combined by a baseband signal processing unit BSG2. This baseband signal processing unit BSG2 uses the downconverted signal components BS1 to BSk as at least two diversity signals coming from different diversity paths and combines these at least two diversity signals BS1 to BSk in such a way that co-channel interference and/or adjacent channel intereference is suppressed. The baseband signal processor BSG2 combines the downconverted signal components BS1 to BSk of all k diversity paths and applies then expedient interference eliminating or at least mitigating procedures. Thus the receiver RE combines the received signals and recovers the transmitted information.

By combining the received multicarrier signals the receiver improves reception quality in terms of bit error probability compared to the case where the base station transmitter would transmit the same information signal only over one carrier frequency.

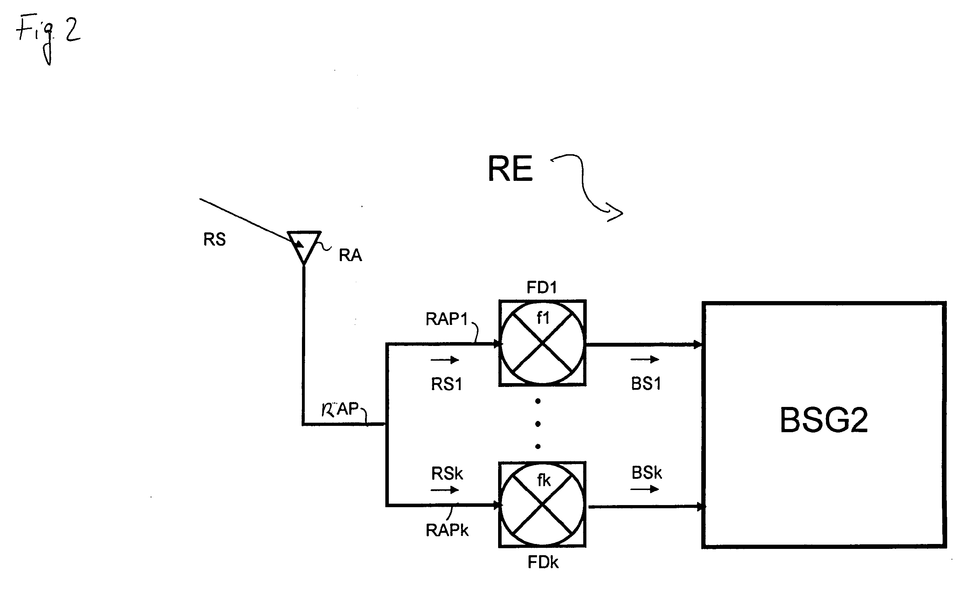

It is advantageous to use the same baseband signal processing unit for the transceiver and the receiver, if both are components of the respective base station and/or communication device. Thus, usually a communication device has the transmitter TR of figure 1 and the receiver RE of figure 2 both as components. The same is for a base station. For example the communication device MP of figure 3 has incorporated the transmitter TR and the receiver RE. Thus, the communication device MP has the digital transmitter TR for transmitting at least one indication signal IS over a transmission channel to at least one base station BA of a communication network indicating the capability of its digital receiver RE to receive signals on two or more carrier frequencies and to combine these for suppressing co-channel and/or adjacent channel interferences. The same is vice versa for each base station.

Of course it could be sufficient, if only the same antenna like e.g. RE is used both for transmitting and receiving the multicarrier signals. Then the transmitting path comprising parts TAP, TAP1 to TAPk, TAP* and the receiving path comprising sections or parts RAP, RAP1 to RAPk are both coupled to the same antenna. For this it could be advantageous to insert an electrical adjustment or adaptation network into the path directly behind the common antenna for separating incoming and outgoing signals.

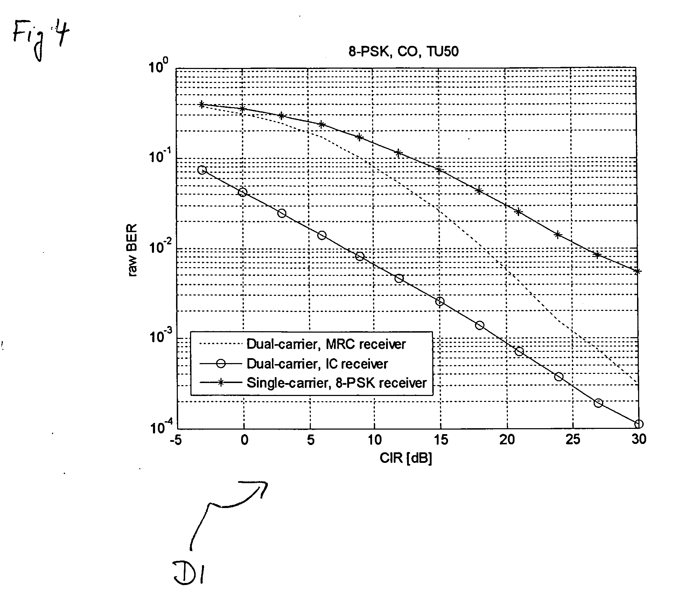

Figure 4 shows diagram DI with simulation results on carrier diversity in comparison to a single carrier transmitter/ receiver.

It is assumed for this example that the digital receiver RE such as depicted in figure 2 transmits an 8-PSK signal over two distinct GSM carriers. The propagation channel profile is TU50. The received signal is interfered by a second 8-PSK signal originating from a neighboring cell. Here, it is assumed that for the interferer the same baseband signal is transmitted over both carriers. Moreover, it is assumed that the two carrier frequencies are separated sufficiently such that all signals on the diversity branches shown in figure 2 are uncorrelated.

Figure 4 compares the raw bit error rate (BER) of different combining schemes of the receiving baseband signal processing unit BSG2 of digital receiver RE of figure 2 as a function of the carrier-to-interferer ratio (CIR). In particular, the BER of a conventional, single-carrier receiver is compared to the BER of a receiver applying maximum ratio combining (MRC) and applying an advanced interference cancellation (IC) algorithm. The BER values for the single carrier receiver are marked by small stars * in figure 4. These lie above the BER values for the dual-carrier MRC receiver, which are marked by dots. The BER values of the dual-carier IC receiver are situated below the BER values of the dual-carrier MRC receiver and are illustrated by small circles. Thus, the dual-carrier IC receiver has the best performance in terms of BER of all tested receivers. This is because at a BER level of 1% the IC receiver shows a remarkable gain of about 18 dB over the conventional receiver, whereas the MRC receiver, which is optimized for additional white Gaussian noise (AWGN) channels, shows a gain of 8 dB.

Afore mentioned references are directed to:

[1] 3GPP TSG GERAN, "Digital cellular telecommunications system; General description", TS 45.001 V6.6.0, 2005-04.

[2] 3GPP TSG GERAN, "Digital cellular telecommunications system; Radio transmission and reception", TS 45.005 V6.9.0, 2005-04.

[3] 3GPP TSG GERAN, "Digital cellular telecommunications system; Mobile radio interface Layer 3 specification; Core network protocols; Stage 3", TS 24.008 V6.8.0, 2005-03.

[4] 3GPP TSG GERAN, "Feasibility Study on Single Antenna Interference Cancellation (SAIC) for GSM Networks (Release 6)", TS 45.903, V6.0.1, 2004-11.

[5] 3GPP TSG GERAN, "Future GERAN Evolution", work item description, No. GP-051052, April 2005.

[6] 3GPP TSG GERAN, "Discussion Paper for GERAN Evolution", discussion paper, source: NOKIA, No. GP-050919, April 2005.

[7] P. A. Hoeher, S. Badri-Hoeher, W. Xu, C. Krakowski, "Single-antenna co-channel interference cancellation for TDMA cellular radio systems," IEEE Wireless Communications, vol. 12, no. 2, April 2005, pp. 30-37.

[8] J. G. Proakis, "Digital Communications", 4th ed., New York: McGrawHill, 2001.

[9] J. H. Winters, "Optimum combining in digital mobile radio with cochannel interference," IEEE Journal on Selected Areas in Communications, vol. 2, no. 4, July 1984, pp. 528-539.

**Claims**

1. Digital receiver (RE) for a communication device (MP) or for a base station (BA) of a telecommunication system comprising only one receiving antenna (RA) for detecting a transmitted radio information signal (RS) having different signal components (RS1 to RSk) on a plurality of distinct carrier frequencies (f1 to fk), wherein within the receiving path (RAP) of the receiving antenna (RA) at least one frequency downconverter (FD1 to FDk) for downconverting all signal components (RS1 to RSk) of said detected radio signal (RS) from their respective carrier frequencies (f1 to fk) to a given baseband (B) is provided, and wherein downstream after said downconverter (FD1 to FDk) a baseband signal processing unit (BSG) is provided processing these downconverted signal components (BS1 to BSk) as at least two diversity signals coming from different diversity paths and combining these at least two diversity signals (BS1 to BSk) in such a way that co-channel interference and/or adjacent channel interference is suppressed.

2. Digital receiver according to claim 1, wherein the transmitted radio information signal (RS) is a GSMK or 8PSK modulated signal.

3. Digital receiver according to any one of the claims 1 or 2, wherein the communication device (MP) is a mobile phone or a cordless phone.

4. Communication device (MP) with a digital receiver (RE) according to any one of the claims 1 or 2.

5. Communication device (MP) according to claim 4 having a digital transmitter (TR) for transmitting at least one indication signal (IS) to at least one base station (BA) of a communication network indicating the capability of the digital receiver (RE) to suppress co-channel and/or adjacent channel interferences according to any one of the claims 1 or 2.

6. Base station (BA) of a telecommunication system with a digital receiver (RE) according to any one of the claims 1 or 2.

**Fig 1:**

EP 1 720 265 A1

Fig. 2

RE

RS

RA

FD1

RAP1

f1

RS1

BS1

RAP

RSk

fk

BSk

RAPk

FDk

BSG2

EP 1 720 265 A1

Fig 3

EP 1 720 265 A1

Fig 4

D1

European Patent
Office

# EUROPEAN SEARCH REPORT

Application Number

EP 05 00 9854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WINTERS J H: "Optimum combining in digital mobile radio with cochannel interference" IEEE TRANSACTIONS ON VEHICULAR TECHNOLOGY, IEEE INC. NEW YORK, US, vol. 47, no. 3, August 1984 (1984-08), pages 144-155, XP002127911 ISSN: 0018-9545 * the whole document * | 1-6 | H04B7/02 H04B1/707 |
| Y | P.A.HOEHER, S. BADRI-HOEHER, WEN XU, C. KRAKOWSKI: "Single-antenna co-channel interference cancellation for TDMA cellular radio systems" IEEE WIRELESS COMMUNICATIONS, [Online] April 2005 (2005-04), pages 30-37, XP002356827 Retrieved from the Internet: URL:http://www.ftw.at/ftw/events/telekommu nikationsforum/WS2003> [retrieved on 2005-11-23] * the whole document * | 1-6 | |
| Y | US 2002/150070 A1 (SHATTIL STEVE J) 17 October 2002 (2002-10-17) * abstract * * paragraphs [0010], [0015] - [0018] * * claims 1-21 * | 1-6 | TECHNICAL FIELDS SEARCHED (IPC) H04B H04L |
| Y | US 2004/152479 A1 (RAINBOLT BRADLEY J ET AL) 5 August 2004 (2004-08-05) * the whole document * | 1-6 | |

-/--

The present search report has been drawn up for all claims

| Place of search | Date of completion of the search | Examiner |
|---|---|---|
| Munich | 30 November 2005 | Mier, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

## EUROPEAN SEARCH REPORT

Application Number

EP 05 00 9854

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHOENEICH H ET AL: "Single antenna interference cancellation: iterative semi-blind algorithm and performance bound for joint maximum-likelihood interference cancellation" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 1716-1720, XP010677673 ISBN: 0-7803-7974-8 * the whole document * ----- | 1-6 | |

TECHNICAL FIELDS
SEARCHED      (IPC)

The present search report has been drawn up for all claims

| Place of search | Date of completion of the search | Examiner |
|---|---|---|
| Munich | 30 November 2005 | Mier, A |

EPO FORM 1503 03.82 (P04C01)

## ANNEX TO THE EUROPEAN SEARCH REPORT
## ON EUROPEAN PATENT APPLICATION NO.

EP 05 00 9854

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2005

| Patent document cited in search report | Publication date | Patent family member(s) | Publication date |
|---|---|---|---|
| US 2002150070 A1 | 17-10-2002 | NONE | |
| US 2004152479 A1 | 05-08-2004 | EP 1588503 A2<br>WO 2004070992 A2 | 26-10-2005<br>19-08-2004 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4142155 A

### Non-patent literature cited in the description

- Digital cellular telecommunications system; General description. *3GPP TSG GERAN*
- Digital cellular telecommunications system; Radio transmission and reception. *3GPP TSG GERAN*
- Digital cellular telecommunications system; Mobile radio interface Layer 3 specification; Core network protocols; Stage 3. *3GPP TSG GERAN*
- Feasibility Study on Single Antenna Interference Cancellation (SAIC) for GSM Networks (Release 6. *GPP TSG GERAN*
- Future GERAN Evolution. *3GPP TSG GERAN,* April 2005
- Discussion Paper for GERAN Evolution. *3GPP TSG GERAN,* April 2005
- **P. A. HOEHER ; S. BADRI-HOEHER ; W. XU ; C. KRAKOWSKI.** Single-antenna co-channel interference cancellation for TDMA cellular radio systems. *IEEE Wireless Communications,* 02 April 2005, vol. 12, 30-37
- **J. G. PROAKIS.** Digital Communications. McGrawHill, 2001
- **J. H. WINTERS.** Optimum combining in digital mobile radio with cochannel interference. *IEEE Journal on Selected Areas in Communications,* July 1984, vol. 2 (4), 528-539